# FASCICULE DE BREVET EUROPEEN

(11) **EP 0 965 766 B1**
(45) Date de publication et mention de la délivrance du brevet: **27.08.2003**
(21) Numéro de dépôt: 98440134.9
(22) Date de dépôt: 18.06.1998
(51) Int. Cl.: F16B 12/42, A47B 47/00

(54) **Dispositif d'assemblage pour pièces planes et éléments tubulaires**
Verbindungsvorrichtung für flache Gegenstände und Rohrelemente
Connection device for flat pieces and tubular elements

(43) Date de publication de la demande: 22.12.1999
(73) Titulaire: HUSSON COLLECTIVITES, S.A., F-68650 Lapoutroie (FR)
(72) Inventeur: Husson, Daniel, 68240 Kaysersberg (FR); Pontius, Alain, 68630 Bennwihr (FR)
(74) Mandataire: Nuss, Pierre

(56) Documents cités:
- BE-A- 388 449
- DE-U- 8 605 170
- DE-U- 29 706 757
- FR-A- 1 483 186
- FR-A- 2 514 844
- FR-A- 2 605 687
- US-A- 2 323 829

## Description

La présente invention concerne le domaine de l'assemblage d'éléments de structures sous forme de pièces planes et d'éléments tubulaires, en particulier pour des équipements de loisirs, notamment des équipements d'aires de jeu pour enfants, et a pour objet un dispositif d'assemblage pour pièces planes et éléments tubulaires.

Les structures pour équipements de loisirs, notamment pour les équipements d'aires de jeu pour enfants, sont généralement constituées par un assemblage de pièces planes sous forme de panneaux et d'éléments tubulaires formant simultanément l'infrastructure. A cet effet, l'infrastructure en éléments tubulaires est sous forme d'un ensemble mécano-soudé ou assemblé mécaniquement, sur lequel sont fixées les pièces planes. L'assemblage de ces pièces sur l'infrastructure est couramment effectué par prévision de pattes de montage, solidaires des éléments tubulaires et sur lesquelles les pièces planes sont fixées par vissage ou par boulonnage, ces pattes de montage étant également en métal, ce afin de satisfaire aux exigences de tenue mécaniques.

Un tel mode de réalisation présente, cependant, l'inconvénient de nécessiter des travaux relativement complexes d'assemblage de pièces par soudage et de positionnement précis de celles-ci. En effet, les pattes de montage destinées à la fixation des pièces planés nécessitent un positionnement extrêmement précis sur l'infrastructure, afin d'éviter tout défaut de fixation desdites pièces planes et un gauchissement éventuel de ces dernières.

Par ailleurs, on connaît, par DE-U-297 06 757, un dispositif pour l'assemblage de pièces planes sur des éléments tubulaires, ce dispositif étant constitué par une pièce destinée à être fixée sur des éléments tubulaires d'infrastructure, d'autres pièces étant fixées pour leur part sur des pièces planes et étant reliées par l'intermédiaire d'un élément de serrage commun sur la pièce de fixation sur les éléments tubulaires.

Le mode de réalisation selon ce document met en oeuvre un nombre relativement important de pièces pour la fixation même des pièces planes, l'élément de serrage de ces pièces servant ensuite à la fixation du premier sous-ensemble réalisé sur la pièce de fixation sur les éléments tubulaires.

Le dispositif selon ce document ne permet pas un montage simple, rapide et à moindre coût de pièces planes sur des éléments tubulaires, tout en assurant une esthétique parfaite des équipements.

La présente invention a pour but de pallier ces inconvénients en proposant un dispositif d'assemblage pour pièces planes et éléments tubulaires permettant un montage simple et rapide de pièces de conformation différente, tout en assurant une finition parfaite des équipements ainsi réalisés.

En effet, conformément à l'invention, le dispositif d'assemblage pour pièces planes et éléments tubulaires, qui est essentiellement constitué par des moyens de fixation de pièces planes sur des éléments tubulaires d'infrastructure, est caractérisé en ce que lesdits moyens de fixation sont constitués chacun d'un demi-collier présentant un évidement et ledit dispositif d'assemblage comporte au moins un moyen de prépositionnement et de serrage sur les éléments tubulaires d'infrastructure, qui est constitué par une pièce d'appui comportant une concavité semi-cylindrique de section correspondante à celle des éléments tubulaires, par une vis traversant ladite pièce d'appui et un perçage correspondant desdits éléments tubulaires, afin de coopérer avec un écrou logé dans le demi-collier.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue partielle en perpective d'un dispositif de jeu, dont les éléments constitutifs sont assemblés au moyen du dispositif conforme à l'invention ;
la figure 2 est une vue analogue à celle de la figure 1, du dispositif de jeu avant montage des pièces planes ;
la figure 3 est une vue en perpective, à plus grande échelle, représentant le montage d'un moyen de fixation de pièce plane sur un élément tubulaire, et
la figure 4 est une vue analogue à celle de la figure 3 représentant le montage d'une pièce plane sur un moyen de fixation correspondant.

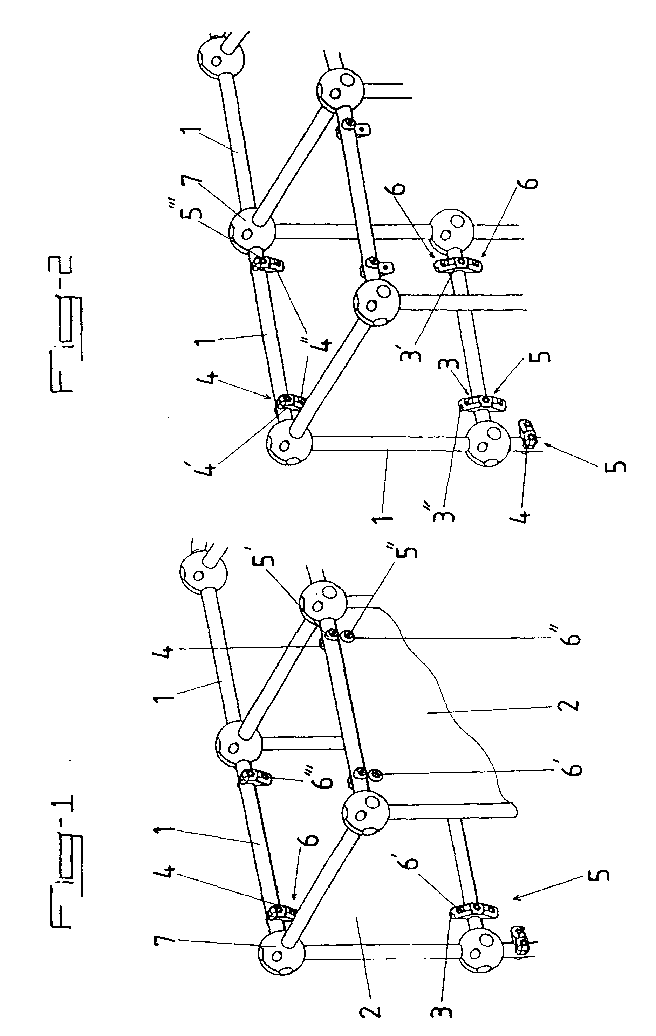

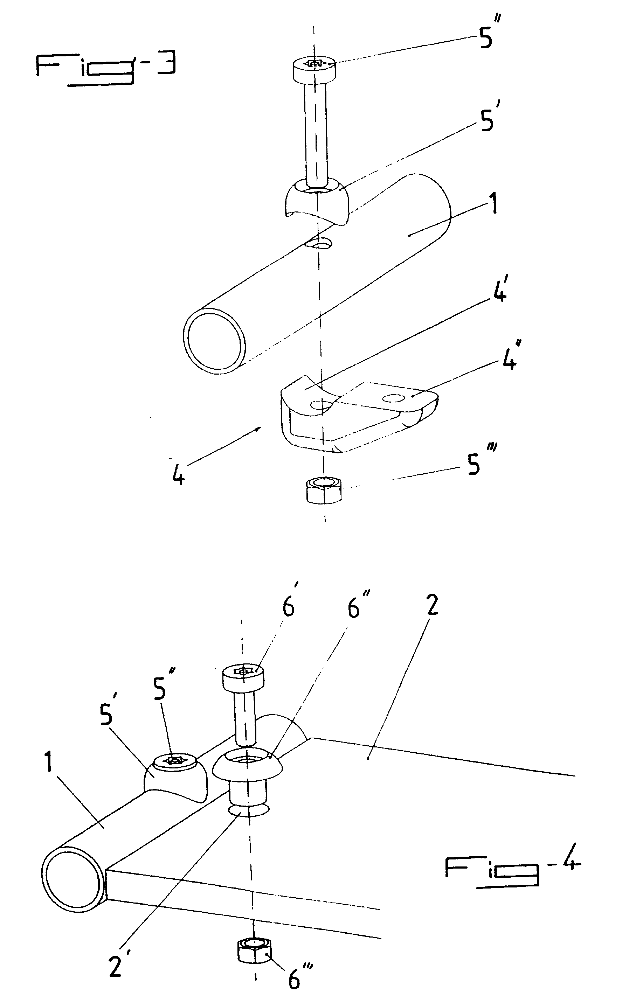

Les figures 1 et 2 des dessins annexés représentent, à titre d'exemple, un dispositif de jeu, qui est constitué par une infrastructure formée par des éléments tubulaires 1 et par des pièces planes 2 fixées sur ladite infrastructure par l'intermédiaire d'un dispositif d'assemblage pour pièces planes et éléments tubulaires. Les pièces planes 2 sont avantageusement sous forme de panneaux d'habillage.

Ce dispositif d'assemblage pour pièces planes et éléments tubulaires est essentiellement constitué par des moyens 3 et 4 de fixation des pièces planes 2 sur lesdits éléments tubulaires 1, lesdits moyens de fixation 3 et 4 étant pourvus chacun d'au moins un moyen 5 de prépositionnement et de serrage sur les éléments tubulaires 1 d'infrastructure (figures 1 à 4).

Les moyens 3 de fixation des pièces planes 2 sont préférentiellement constitués chacun par un demi-collier présentant de part et d'autre d'un évidement 3' deux pattes d'appui 3" s'étendant dans un même plan, par un moyen 5 de prépositionnement et de serrage dudit demi-collier sur un élément tubulaire 1 et par au moins deux ensembles 6 de serrage des pièces planes 2 sur les pattes d'appui 3". Le moyen 5 de prépositionnement et de serrage du demi-collier sur un élément tubulaire 1 est avantageusement constitué par une pièce d'appui 5' comportant une concavité semi-cylindrique de section correspondante à celle des éléments tubulaires 1, par une vis 5" traversant ladite pièce d'appui 5' et un perçage correspondant 1' desdits éléments tubulaires 1 et coopérant avec un écrou 5''' logé dans le demi-collier (figures 1 et 2). La vis 5" est préférentiellement une vis à six-pans creux ou analogue, dont la tête vient se loger, en position de serrage, dans un évidement correspondant de la pièce d'appui 5'.

Ainsi, les moyens 3 de fixation des pièces planes 2 peuvent être prépositionnés sans serrage sur les éléments tubulaires 1 par l'intermédiaire des moyens 5, dont les vis 5" sont simplement légèrement vissées dans les écrous 5''', en laissant subsister un jeu de fonctionnement entre les pièces d'appui 5' et les éléments tubulaires 1. Il en résulte la possibilité de ne réaliser le serrage définitif des vis 5" qu'après le montage des pièces planes 2, de sorte que ce dernier est plus facile à réaliser. En effet, tant que les moyens 3 de fixation des pièces planes 2 ne sont pas serrés sur les éléments tubulaires 1, il subsiste une possibilité de pivotement de ces derniers par rapport aux éléments tubulaires 1 et ainsi une liberté de positionnement plus grande desdites pièces planes 2 par rapport auxdits éléments tubulaires 1, avant le serrage définitif des vis 5".

Les moyens 4 de fixation des pièces planes 2 sur les éléments tubulaires 1 (figures 1 à 4) sont constitués chacun par un demi-collier asymétrique présentant un évidement 4' adjacent à une patte d'appui 4", par un moyen 5 de prépositionnement et de serrage dudit demi-collier sur un élément tubulaire 1 et par au moins un ensemble 6 de serrage des pièces planes 2 sur les pattes d'appui 4". Le moyen 5 de prépositionnement et de serrage du demi-collier est identique à celui mis en oeuvre avec les moyens 3 de fixation des pièces planes 2 et permet les mêmes libertés de montage.

Les ensembles 6 de serrage des pièces planes 2 sur les pattes d'appui 3" ou 4" sont constitués chacun par une vis 6' coopérant avec une rondelle de serrage et de blocage 6", se centrant et s'appuyant sur la face de la pièce plane correspondante 2 opposée à celle s'appuyant sur la patte d'appui 3" ou 4" du moyen 3 ou 4 correspondant, et par un écrou 6''' monté dans un logement de la patte d'appui 3" ou 4" et coopérant, pour le serrage, avec la vis 6' traversant la pièce plane 2 (figures 1, 2 et 4).

Les vis 6' des ensembles 6 se présentent avantageusement également sous forme de vis à six-pans creux ou analogues, comme les vis 5", dont la tête vient se loger, en position de service, dans un lamage prévu dans la rondelle de serrage et de blocage 6". Cette rondelle 6" se présente sous forme d'une pièce épaulée, dont la partie de plus grand diamètre s'appuie sur la pièce plane 2 et reçoit la tête de la vis 6', et dont la partie de diamètre réduit forme un guidage de la tige filetée de la vis 6' dans un perçage correspondant 2' de la pièce plane 2 (figure 4). Une telle réalisation des ensembles 6 permet un montage aisé des parties planes 2 sur les éléments tubulaires 1 en préservant lesdites parties planes 2 contre toute détérioration. En effet, par la prévision des rondelles 6", les vis 6' n'entrent pas directement en contact avec les parties planes, de sorte qu'elles ne peuvent occasionner aucune dégradation de ces dernières.

En outre, les ensembles 6 permettent également un montage préalable sans serrage des pièces planes 2 sur les moyens 3 et 4 de fixation de ces pièces sur les éléments tubulaires 1, de sorte que tous les éléments constitutifs d'une structure peuvent être assemblés et positionnés avec précision avant leur fixation définitive. Il en résulte que la finition mécanique et esthétique des équipements ainsi réalisés est parfaite. En effet, grâce à l'invention il est possible d'effectuer, dans un premier temps, un montage et un serrage parfaits des pièces planes 2 sur les moyens 3 et 4, afin d'obtenir une liaison sans aspérité de ces pièces planes 2 sur lesdits moyens 3 et 4, puis de réaliser le serrage de ces derniers sur les éléments tubulaires 1 par l'intermédiaire des moyens 5.

Comme le montrent plus particulièrement les figures 1 et 2 des dessins annexés, l'assemblage des éléments tubulaires 1 d'infrastructure entre-eux est avantageusement effectué au moyen de noeuds d'assemblage 7 du type notamment connu par FR-A-2 694 583 et consistant en deux demi-coquilles assemblées entre elles par boulonnage et munies d'évidements correspondants et/ou de perçages pour l'insertion et le blocage d'extrémités d'éléments tubulaires. Un tel noeud d'assemblage permet de réaliser un assemblage, d'une part, des extrémités de plusieurs éléments tubulaires au moyen des demi-coquilles, les moyens de serrage des coquilles entre-elles servant simultanément au blocage desdites extrémités au niveau des évidements correspondants et, d'autre part, le montage de l'extrémité d'autres éléments tubulaires perpendiculairement au plan des premiers avec maintien en position par des moyens d'assujettissement spécifiques. Ainsi, toutes les géométries de structures sont possibles. Par ailleurs, de tels noeuds d'assemblage 7 permettent d'absorber d'éventuels défauts d'assemblage des pièces planes 2 sur les éléments tubulaires 1, du fait du jeu de montage préalable nécessaire extrémités desdits éléments tubulaires 1 dans lesdits noeuds d'assemblage avant leur serrage.

Grâce à l'invention, il est possible de réaliser des structures constituées par un assemblage de pièces planes et d'éléments tubulaires, en particulier pour des équipements de loisirs, notamment des équipements d'aires de jeu pour enfants, par mise en oeuvre d'éléments de base de forme et de constitution simples et ne nécessitant que des opérations d'usinage simples et peu onéreuses. En outre, le montage de telles structures peut être réalisé en des temps extrêmement courts par des opérateurs non spécialisés et les pièces mises en oeuvre ne laissent en saillie aucune aspérité dangereuse pour les utilisateurs.

Enfin, les structures obtenues par mise en oeuvre de la présente invention peuvent être facilement installées et éventuellement démontées et permettent une adaptation facile, ultérieure, de dispositifs ou d'agrès complémentaires de manière à être évolutives.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'assemblage pour pièces planes (2) et éléments tubulaires (1), essentiellement constitué par des moyens (3, 4) de fixation de pièces planes (2) sur des éléments tubulaires d'infrastructure (1), **caractérisé en ce que** lesdits moyens de fixation (3, 4) sont constitués chacun d'un demi-collier présentant un évidement et d'au moins un moyen (5) de prépositionnement et de serrage des dits moyens de fixation (3, 4) sur les éléments tubulaires d'infrastructure (1) étant constitué par une pièce d'appui (5') comportant une concavité semi-cylindrique de section correspondante à celle des éléments tubulaires (1), par une vis (5") traversant ladite pièce d'appui (5') et un perçage correspondant (1') desdits éléments tubulaires (1) afin de coopérer avec un écrou (5''') logé dans le demi-collier.

2. Dispositif d'assemblage, suivant la revendication 1, **caractérisé en ce que** chaque demi-collier des moyens (3) de fixation des pièces planes (2) présente de part et d'autre d'un évidement (3') deux pattes d'appui (3") s'étendant dans un même plan et coopère avec au moins deux ensembles (6) de serrage des pièces planes (2) sur les pattes d'appui (3").

3. Dispositif d'assemblage, suivant la revendication 1, **caractérisé en ce que** chaque demi-collier des moyens (4) de fixation des pièces planes (2) est asymétrique et présente un évidement (4') adjacent à une patte d'appui (4") et coopère avec au moins un ensemble (6) de serrage des pièces planes (2) sur les pattes d'appui (4").

4. Dispositif d'assemblage, suivant la revendication 1, **caractérisé en ce que** la vis (5") est une vis à six-pans creux ou analogue, dont la tête vient se loger, en position de serrage, dans un évidement correspondant de la pièce d'appui (5').

5. Dispositif d'assemblage, suivant l'une quelconque des revendications 2 et 3, **caractérisé en ce que** les ensembles (6) de serrage des pièces planes (2) sur les pattes d'appui (3", 4") sont constitués chacun par une vis (6') coopérant avec une rondelle de serrage et de blocage (6"), ladite rondelle (6") se centrant et s'appuyant sur la face de la pièce plane correspondante (2) opposée à celle s'appuyant sur la patte d'appui (3", 4") du moyen (3, 4) correspondant, et par un écrou (6''') monté dans un logement de la patte d'appui (3", 4") et coopérant, pour le serrage, avec la vis (6') traversant la pièce plane (2).

6. Dispositif d'assemblage, suivant la revendication 5, **caractérisé en ce que** les vis (6') des ensembles (6) se présentent sous forme de vis à six-pans creux ou analogues, dont la tête vient se loger, en position de service, dans un lamage prévu dans la rondelle de serrage et de blocage (6").

7. Dispositif d'assemblage, suivant la revendication 5, **caractérisé en ce que** la rondelle (6") se présente sous forme d'une pièce épaulée, dont la partie de plus grand diamètre s'appuie sur la pièce plane (2) et reçoit la tête de la vis (6'), et dont la partie de diamètre réduit forme un guidage de la tige filetée de la vis (6') dans un perçage correspondant (2') de la pièce plane (2).

## Patentansprüche

1. Vorrichtung zur Montage von flächigen Bauteilen (2) und rohrförmigen Elementen (1), die im wesentlichen Mittel (3, 4) zum Befestigen der flächigen Bauteile (2) an den rohrförmigen Elementen (1) des Traggerüstes umfaßt, **dadurch gekennzeichnet, daß** die Befestigungsmittel (3, 4) jeweils ein halbes Ringelement mit einer halbkreisförmigen Aussparung und wenigstens ein Mittel (5) zum Vorpositionieren und zum Anpressen der Befestigungsmittel (3, 4) an die rohrförmigen Elemente des Traggerüstes (1) aufweisen, wobei das Mittel (5) ein Halteteil (5') mit einer halbzylindrischen Vertiefung, die den rohrförmigen Elementen (1) entspricht, und eine Schraube (5") umfaßt, die sich durch das Halteteil (5') und durch eine entsprechende in den rohrförmigen Elementen (1) vorgesehene Bohrung (1') erstreckt und mit einer unter dem Halbkreis angeordneten Mutter (5"') zusammenwirkt.

2. Montagevorrichtung nach Anspruch 1, **dadurch gekennzeichnet, daß** jedes halbe Ringelement der Mittel (3) zur Befestigung der flächigen Bauteile beidseitig einer Aussparung (3') zwei in derselben Ebene angeordnete Haltefüße (3'') aufweist und mit wenigstens zwei Spanneinheiten (6) zum Festspannen der flächigen Bauteile (2) an den Haltefüßen (3") zusammenwirkt.

3. Montagevorrichtung nach Anspruch 1, **dadurch gekennzeichnet, daß** jedes halbe Ringelement der Mittel (3) zur Befestigung der flächigen Bauteile asymmetrisch ist und eine Aussparung (4') neben einem Haltefuß (4") aufweist und mit wenigstens einer Spanneinheit (6) zum Festspannen der flächigen Bauteile (2) an den Haltefüßen (4") zusammenwirkt.

4. Montagevorrichtung nach Anspruch 1, **dadurch gekennzeichnet, daß** die Schraube (5") eine Innensechskantschraube oder dergleichen ist, deren Kopf im festgezogenen Zustand in eine entsprechende Aussparung des Halteteils (5') eingelassen ist.

5. Montagevorrichtung nach einem der Ansprüche 2 oder 3, **dadurch gekennzeichnet, daß** die Spanneinheiten (6) zum Festspannen der flächigen Bauteile (2) an den Haltefüßen (3", 4") jeweils eine Schraube (6') aufweisen, die mit einer Unterleg- und Sperrscheibe (6") zusammenwirkt, wobei sich die Scheibe (6") auf derjenigen Fläche des entsprechenden flächigen Bauteils (2) zentriert und an dieser abstützt, die der Fläche gegenüberliegt, auf die sich der Haltefuß (3", 4") des entsprechenden Mittels (3, 4) stützt, und ferner eine Mutter (6") umfaßt, die an einem Sitz des Haltefußes (3", 4") befestigt ist und zum Festspannen mit der sich durch das flächige Bauteil (2) erstreckenden Schraube (6') zusammenwirkt.

6. Montagevorrichtung nach Anspruch 5, **dadurch gekennzeichnet, daß** es sich bei den Schrauben (6') der Einheiten (6) um Innensechskantschrauben handelt, deren Kopf im Betriebszustand in einer in der Unterleg- und Sperrscheibe (6") angeordneten Versenkung angeordnet ist.

7. Montagevorrichtung nach Anspruch 5, **dadurch gekennzeichnet, daß** die Scheibe (6") einen Schulterabschnitt aufweist, dessen Bereich mit größerem Durchmesser sich auf das flächige Bauteil (2) stützt und den Kopf der Schraube (6') aufnimmt, und dessen Bereich mit geringerem Durchmesser eine Führung für den Gewindebereich der Schraube (6') durch die entsprechende Bohrung (2') des flächigen Bauteils (2) bildet.

## Claims

1. Assembly device for flat pieces (2) and tubular elements (1), essentially consisting of fixing means (3, 4) for fixing flat pieces (2) on an infrastructure (1) of tubular elements, **characterised in that** said fixing means (3, 4) each consist of a half-collar with a recess and of at least one means (5) for pre-positioning and gripping said fixing means (3, 4) on the infrastructure (1) of tubular elements consisting of a bearing piece (5') comprising a semicylindrical concavity having a cross-section corresponding to that of the tubular elements (1), of a screw (5") traversing said bearing piece (5') and a corresponding bore (1') of said tubular elements (1) so as to cooperate with a nut (5''') disposed in the half-collar.

2. Assembly device according to claim 1, **characterised in that** each half-collar of the means (3) for fixing the flat pieces (2) has, on either side of a recess (3'), two bearing lugs (3") extending in a same plane and cooperates with at least two units (6) for gripping the flat pieces (2) on the bearing lugs (3").

3. Assembly device according to claim 1, **characterised in that** each half-collar of the fixing means (4) for the flat pieces (2) is asymmetrical and has a recess (4') adjacent to a bearing lug (4") and cooperates with at least one unit (6) for gripping the flat pieces (2) on the bearing lugs (4").

4. Assembly device according to claim 1, **characterised in that** the screw (5") is a six-sided hollow screw or the like, of which the head is disposed, in the gripping position, in a corresponding recess of the bearing piece (5').

5. Assembly device according to either of claims 2 and 3, **characterised in that** the units (6) for gripping the flat pieces (2) on the bearing lugs (3", 4") each consist of a screw (6') cooperating with a gripping and locking washer (6"), said washer (6") being centred and resting on the face of the corresponding flat piece (2) opposite to that resting on the bearing lug (3", 4") of the corresponding means (3, 4) and of a nut (6''') fitted in a recess in the bearing lug (3", 4") and cooperating, for gripping, with the screw (6') traversing the flat piece (2).

6. Assembly device according to claim (5), **characterised in that** the screws (6') of the units (6) have the form of six-sided hollow screws or the like of which the head is disposed, in the service position in a counterbore provided in the gripping and locking washer (6").

7. Assembly device according to claim (5), **characterised in that** the washer (6") has the form of a shouldered piece of which the portion of greatest diameter rests on the flat piece (2) and receives the head of the screw (6'), and of which the portion of reduced diameter forms a guide for the screw-threaded shank of the screw (6'), in a corresponding hole (2') of the flat piece (2).
